# FASCICULE DE BREVET EUROPEEN

(11) **EP 3 662 351 B1**
(45) Date de publication et mention de la délivrance du brevet: **28.12.2022**
(21) Numéro de dépôt: 18745641.3
(22) Date de dépôt: 31.07.2018
(51) Int. Cl.: G06F 3/01, G06F 3/044

(54) **INTERFACE À RETOUR HAPTIQUE POUR VÉHICULE AUTOMOBILE**
HAPTISCHE RÜCKKOPPLUNGSSCHNITTSTELLE FÜR EIN KRAFTFAHRZEUG
HAPTIC FEEDBACK INTERFACE FOR A MOTOR VEHICLE

(30) Priorité: 31.07.2017 FR 1757312
(43) Date de publication de la demande: 10.06.2020
(73) Titulaire: Valeo Comfort and Driving Assistance, 94046 Créteil Cedex (FR)
(72) Inventeur: AUBRY, Anthony, 94046 Créteil CEDEX (FR)
(74) Mandataire: Delplanque, Arnaud
(86) Numéro de dépôt international: PCT/EP2018/070802
(87) Numéro de publication internationale: WO 2019/025468

(56) Documents cités:
- US-A1- 2007 121 021
- US-A1- 2008 192 193
- US-A1- 2016 021 444

## Description

La présente invention concerne une interface à retour haptique pour la commande d'au moins une fonction d'un organe de véhicule automobile.

Dans le domaine automobile, les interfaces de commande multifonctions à surface tactile sont de plus en plus utilisées pour commander des systèmes électriques ou électroniques, tels qu'un système de climatisation, un système audio ou encore un système de navigation. De telles interfaces comportent un écran tactile permettant à l'utilisateur une navigation aisée dans des menus déroulants comportant différentes commandes relatives aux systèmes à commander.

Afin de compenser la perte d'informations par retour mécanique confirmant à l'utilisateur un contact sur la surface tactile, on prévoit la génération d'un retour haptique comme rétroaction à l'utilisateur. Le retour haptique est généralement obtenu par l'action d'un ou plusieurs actionneurs vibratoires.

US 2007/121021 A1 concerne une pluralité d'affichages pour un dispositif électronique comprenant une couche d'affichage, une couche de guidage de la lumière, et une couche de matériau d'amortissement couplée entre la couche de guidage de la lumière et la couche d'affichage. Dans un mode de réalisation, la couche d'affichage est une couche d'affichage à cristaux liquides, mais d'autres types de couches d'affichage peuvent être utilisés. La couche de guidage de la lumière peut servir de contre-jour pour la couche d'affichage, et peut avoir une épaisseur comprise entre 0,05 mm et 2 mm environ. Les dispositifs décrits comprennent au moins une couche intercalée de matériau absorbant l'énergie acoustique et/ou mécanique, également appelé matériau d'amortissement, entre la couche d'affichage sensible aux vibrations et une couche dure proche de la couche d'affichage. Le matériau d'amortissement peut réduire le bruit audio. La couche d'absorption d'énergie peut prendre la forme d'une feuille d'absorption d'énergie audio interposée entre les couches de l'écran. Dans les véhicules automobiles, la tendance actuelle est l'augmentation des dimensions des écrans tactiles. Des tailles moyennes d'écrans allant jusqu'à douze pouces commencent aujourd'hui à supplanter les écrans de sept pouces.

Une des difficultés liée à l'utilisation d'écrans de grande taille est l'augmentation associée du bruit parasite engendré par la mise en vibration de ces surfaces.

La nuisance sonore peut être encore plus importante lorsque la vibration haptique est dirigée dans une direction perpendiculaire à la surface de l'écran tactile.

Un but de la présente invention est donc de proposer une interface à retour haptique dont le bruit parasite sonore généré avec la vibration haptique est diminué.

A cet effet, la présente invention a pour objet une interface à retour haptique pour la commande d'au moins une fonction d'un organe de véhicule automobile, comportant :
- un écran tactile comprenant :
   - une dalle tactile capacitive comportant au moins un capteur capacitif et une plaque frontale agencée sur le capteur capacitif, et
   - un écran d'affichage disposé sous la dalle tactile capacitive, au moins un actionneur vibratoire configuré pour faire vibrer la plaque frontale au moins en réponse à un contact ou un appui exercé sur la dalle tactile capacitive afin de générer un retour haptique,
   caractérisée en ce que la plaque frontale est formée d'un verre feuilleté comportant au moins deux feuilles de verre prenant en sandwich au moins un film amortisseur intercalaire permettant d'amortir les vibrations sonores parasites induites par les vibrations haptiques.

Le film amortisseur intercalaire permet d'amortir les vibrations sonores parasites induites par les vibrations haptiques. Grâce à la plaque frontale réalisée en verre feuilleté, le bruit acoustique est limité par rapport à l'utilisation d'une plaque de verre simple. En outre, les amplitudes d'accélération des vibrations haptiques ne sont pas impactées par l'utilisation d'un verre feuilleté.

Selon une ou plusieurs caractéristiques de l'interface, prise seule ou en combinaison :
- l'épaisseur du film amortisseur intercalaire est inférieure à 1mm, telle que inférieure à 0,6mm,
- l'épaisseur du film amortisseur intercalaire est supérieure à 0,2mm, telle que supérieure à 0,4mm,
- le film amortisseur intercalaire est un polymère,
- le film amortisseur intercalaire est un film PVB,
- une feuille de verre frontale du verre feuilleté présente une épaisseur comprise entre 0,5mm et 1mm,
- une feuille de verre arrière du verre feuilleté présente une épaisseur comprise entre 0,2mm et 0,7mm,
- l'actionneur vibratoire est configuré pour faire vibrer un support de l'interface sur lequel est fixée la plaque frontale dans une direction orthogonale au plan de la plaque frontale,
- l'actionneur vibratoire est configuré pour faire vibrer un support de l'interface sur lequel est fixée la plaque frontale dans une direction latérale, parallèle au plan de la plaque frontale,
- l'interface comporte :
   - une partie fixe comprenant une embase,
   - au moins un élément élastique agencé entre la partie fixe et une partie mobile de l'interface comprenant l'écran tactile, et
   - un capteur d'appui capacitif configuré pour mesurer un déplacement de la partie mobile par rapport à la partie fixe,
- la partie mobile comporte un support sur lequel est fixée la plaque frontale, le support s'étendant à l'arrière de l'écran d'affichage en étant traversé par des plots de l'embase portant le au moins capteur d'appui ou une surface métallique, l'autre étant porté en vis-à-vis par le support de manière qu'un appui sur la plaque frontale rapproche le au moins un capteur d'appui de la surface métallique,
- le support est relié par au moins un élément élastique à un support intermédiaire mobile de l'interface, le support intermédiaire étant relié par au moins un élément élastique à la partie fixe, les plots de l'embase traversant le support et le support intermédiaire.

D'autres caractéristiques et avantages de l'invention ressortiront de la description suivante, donnée à titre d'exemple et sans caractère limitatif, en regard des dessins annexés sur lesquels :
Figure 1 représente une vue d'une portion de l'habitacle intérieur d'un véhicule automobile comprenant une interface qui est installée à titre d'exemple au niveau de la planche de bord du véhicule.
Figure 2 montre une vue schématique de face d'éléments de l'interface de la Figure 1.
Figure 3 montre une vue en coupe longitudinale A-A de l'interface de la figure 2 selon un premier exemple de réalisation.
Figure 4 est une vue schématique montrant des éléments de l'écran tactile de l'interface de la Figure 3.
Figure 5 est un graphique montrant le niveau de bruit N (en dBA) en fonction de la fréquence F (en Hz) pour une plaque de verre (courbe A), une plaque frontale en verre feuilleté ayant un film amortisseur intercalaire présentant une épaisseur de 0,5mm (courbe B), une épaisseur de 0,76mm (courbe C) et une épaisseur de 0,38mm (courbe D).
Figure 6 est un graphique montrant les amplitudes d'accélération des vibrations V (en G) en fonction de la fréquence F (en Hz) pour une plaque de verre (courbe A), une plaque frontale en verre feuilleté ayant un film amortisseur intercalaire présentant une épaisseur de 0,5mm (courbe B), une épaisseur de 0,76mm (courbe C) et une épaisseur de 0,38mm (courbe D).
Figure 7 montre une vue en coupe longitudinale A-A de l'interface selon un deuxième exemple de réalisation.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

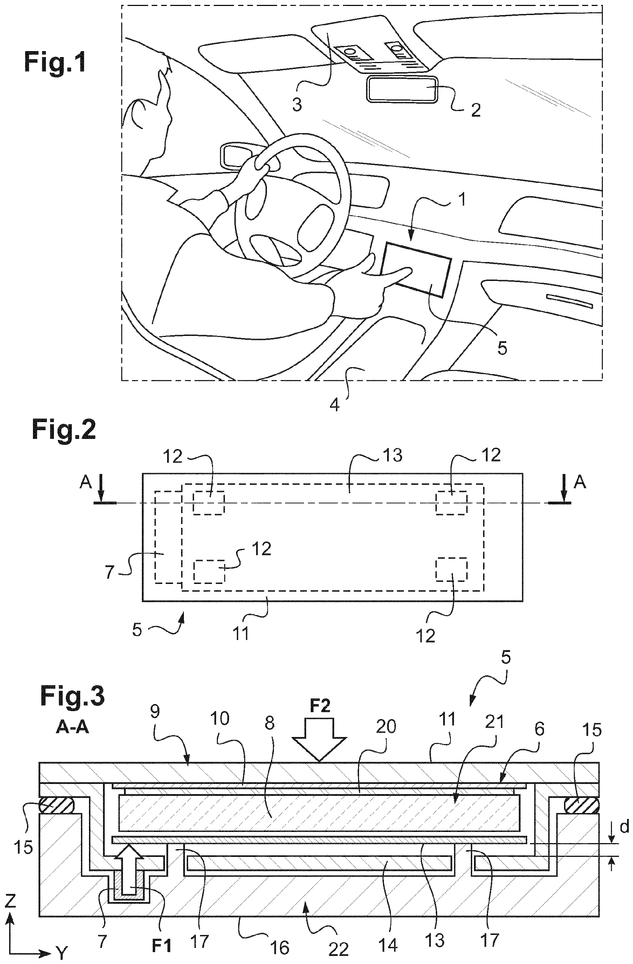

La figure 1 montre des éléments d'une partie avant d'habitacle de véhicule automobile.

L'habitacle comprend notamment une planche de bord 1, un rétroviseur intérieur 2, un module de plafonnier 3 (aussi appelé dôme) placé à proximité du rétroviseur intérieur 2 dans la partie centrale haute de la partie avant de l'habitacle et une console centrale 4 située entre le conducteur et le passager.

L'habitacle comporte une interface 5 à retour haptique notamment propre à être logée dans la planche de bord 1 du véhicule ou à d'autres endroits de l'habitacle, comme par exemple au niveau de la console centrale 4.

Une telle interface 5 permet la commande d'au moins une fonction d'un organe de véhicule automobile telle que la commande des fonctions d'un système de climatisation, d'un système audio, d'un système de téléphonie ou encore d'un système de navigation. Cette interface 5 peut également servir pour les commandes de lève-vitres, de positionnement des rétroviseurs extérieurs ou encore pour le déplacement de sièges motorisés ou pour commander des lumières intérieures, un verrouillage central, un toit ouvrant, les feux de détresse ou les lumières d'ambiance.

L'interface 5 permet par exemple à l'utilisateur une sélection de commande par défilement dans une liste ou une modification d'une valeur de paramètre ou une validation d'une sélection. Elle permet par exemple à l'utilisateur de sélectionner une adresse postale de destination ou un nom dans un répertoire, les réglages de température du système de climatisation ou la sélection d'une piste musicale dans une liste.

Comme on peut mieux le voir sur les Figures 2 et 3, l'interface 5 comporte un écran tactile 6 et au moins un actionneur vibratoire 7.

L'écran tactile 6 comprend un écran d'affichage 8 et une dalle tactile capacitive 9, l'écran d'affichage 8 étant disposé sous la dalle tactile 9.

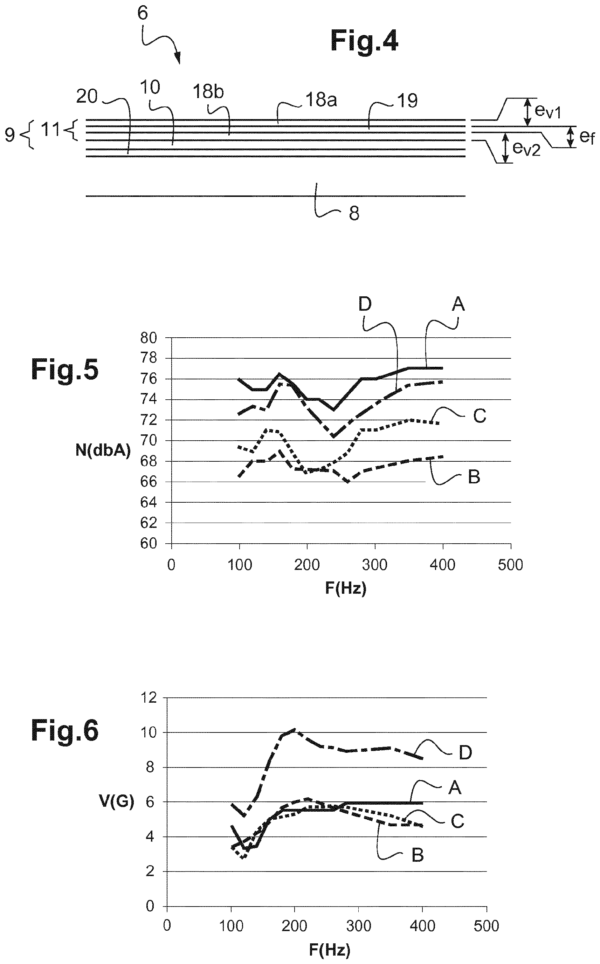

La dalle tactile capacitive 9 comprend au moins un capteur capacitif 10 et une plaque frontale 11 agencée sur le capteur capacitif 10 (Figure 4). Le capteur capacitif 10 est fixé à la plaque frontale 11 par exemple par une colle optique (appelée « optical bounding » en anglais).

Le capteur capacitif 10 permet de détecter une variation de capacité au niveau de la surface de la plaque frontale 11. Le capteur capacitif 10 peut par exemple détecter un contact de l'utilisateur et les coordonnées spatiales du contact sur la surface de la dalle 9. Le capteur capacitif 10 est par exemple formé d'un réseau d'électrodes s'étendant sur tout ou partie de la surface arrière de la plaque frontale 11. Les électrodes sont par exemple réalisées en ITO (oxyde indium - étain) qui permettent au capteur 10 d'être transparent.

La rigidité de la dalle tactile capacitive 9 est obtenue au moyen de la plaque frontale 11 rigide.

La plaque frontale 11 comporte au moins deux feuilles de verre 18a, 18b prenant en sandwich au moins un film amortisseur intercalaire 19 (transparent ou de coloris transparent) (Figure 4). La plaque frontale 11 forme ainsi ce qui est appelé un « verre feuilleté » (ou « laminated glass » en anglais).

Une feuille de verre 18a frontale du verre feuilleté, qui peut être touchée par l'utilisateur, peut porter des éléments de décoration par exemple sérigraphiés. L'épaisseur eᵥ₁ de cette feuille de verre 18a frontale est par exemple comprise entre 0,5mm et 1mm. Elle est par exemple de l'ordre de 0,7mm.

L'épaisseur eᵥ₂ d'une feuille de verre 18b arrière du verre feuilleté est par exemple comprise entre 0,2mm et 0,7mm. Elle est par exemple de l'ordre de 0,55mm.

L'épaisseur e_{f} du film amortisseur intercalaire 19 est par exemple inférieure à 1 mm, telle que inférieure à 0,6mm. L'épaisseur e_{f} du film amortisseur intercalaire 19 est par exemple supérieure à 0,2mm, telle que supérieure à 0,4mm. On prévoit par exemple une épaisseur e_{f} du film amortisseur intercalaire 19 de l'ordre de 0,5mm.

Le film amortisseur intercalaire 19 est par exemple un matériau plastique, tel qu'un polymère, tel qu'un film PVB (ou poly(butyral vinylique)).

Une plaque frontale 11 en verre feuilleté présentant un film amortisseur intercalaire 19 d'épaisseur e_{f} de l'ordre de 0,76mm, une feuille de verre 18a frontale d'épaisseur eᵥ₁ de l'ordre de 0,7mm et une feuille de verre 18b arrière d'épaisseur eᵥ₂ de l'ordre de 0,55mm, présente une épaisseur totale de l'ordre 2.01mm mais avec un poids sensiblement plus faible qu'une plaque de verre de même épaisseur.

Le film amortisseur intercalaire 19 permet d'amortir les vibrations sonores parasites induites par les vibrations haptiques.

L'écran d'affichage 8 est par exemple un écran TFT (« Thin-Film transistor » en anglais) ou LED ou LCD. Il peut être configuré pour afficher des informations associées à la manipulation de l'interface 5.

L'écran 8 est par exemple fixé au capteur capacitif 10 par une colle optique 20 (Figures 3 et 4). Le capteur capacitif 10, la colle optique 20 et la plaque frontale 11 sont au moins partiellement transparents pour permettre la visualisation des images affichées sur l'écran 8.

L'actionneur vibratoire 7 est configuré pour faire vibrer la plaque frontale 11 en réponse à un contact ou un appui exercé sur la plaque 11 de la dalle tactile capacitive 9.

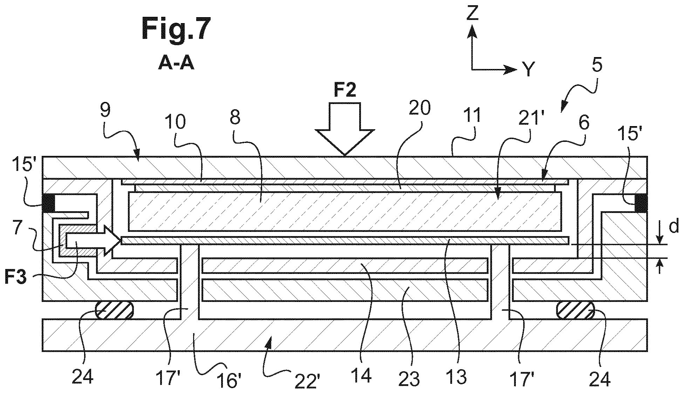

L'actionneur vibratoire 7 peut être configuré pour diriger la vibration dans une direction latérale, dans le plan de la plaque frontale 11 (Flèche F3 sur la Figure 7) ou orthogonalement au plan de la plaque frontale (Flèche F1 sur la Figure 3) ou encore de manière à diriger la vibration selon une combinaison de ces directions.

L'actionneur vibratoire 7 est par exemple de type ERM (pour « Eccentric Rotating-Mass » en anglais) également appelé « moteur vibrant » ou moteur à masselotte ou de type électromagnétique. Il repose par exemple sur une technologie similaire à celle du Haut-Parleur (en anglais : « Voice-Coil »). L'actionneur vibratoire 7 est par exemple un LRA (pour « Linear Resonant Actuator » en anglais), également appelé « moteur linéaire ». Selon un autre exemple, l'actionneur vibratoire 7 est de type piézoélectrique.

L'interface 5 peut en outre comporter au moins un capteur d'appui 12 configuré pour mesurer un paramètre représentatif d'une force d'appui F2 exercée sur la dalle tactile capacitive 9 (Figure 2). Un capteur d'appui 12 est par exemple agencé à proximité de chaque coin de l'écran d'affichage 8.

Le capteur d'appui 12 est par exemple un capteur capacitif configuré pour mesurer une distance entre une partie mobile 21 de l'interface 5 et une partie fixe 22, dans une direction perpendiculaire à la surface de la dalle 9. Une variation de distance entre la partie mobile 21 et la partie fixe 22 est représentative d'un déplacement de la partie mobile 21 par rapport à la partie fixe 22 dû à un appui F2 sur la dalle 9.

Pour cela, le capteur d'appui 12 comporte une électrode, par exemple portée par une carte électronique 13, agencée en regard d'une surface métallique, l'un étant porté par la partie mobile 21, l'autre étant porté par la partie fixe 22 destinée à être fixée au véhicule automobile. La mesure de la force d'appui peut alors être obtenue à partir d'une mesure capacitive du faible déplacement de la dalle 9 (non perceptible) résultant de l'appui exercé sur la dalle 9.

L'écran tactile 6 comprenant la plaque frontale 11 et l'écran d'affichage 8 fixé à l'arrière de la plaque frontale 11, est par exemple porté par un support 14 de la partie mobile 21 qui est relié par au moins un élément élastique 15 à une embase 16 de la partie fixe 22 (Figure 3).

Sur l'exemple de la Figure 3, l'élément élastique 15 est flexible dans la direction Z perpendiculaire à la plaque frontale 11 pour permettre les déplacements et vibrations de la partie mobile 21 dans la direction Z afin de mesurer l'effort exercé sur la dalle tactile capacitive 9 et la faire vibrer. L'élément élastique 15 est plus rigide dans la direction latérale Y, parallèle au plan de la plaque frontale 11. C'est par exemple un bloc en caoutchouc.

La plaque frontale 11 est par exemple fixée au support 14 autour du capteur capacitif 10 de la dalle 9.

Le support 14 s'étend en outre à l'arrière de l'écran d'affichage 8, par exemple d'une extrémité à l'autre de l'écran d'affichage 8, entre la carte électronique 13 et l'embase 16. La carte électronique 13 peut être fixée à l'embase 16 par des plots 17 de l'embase 16 traversant le support 14. L'actionneur vibratoire 7 est fixé au support 14. Ce mode est dit « suspendu ».

Les capteurs d'appui 12 portés par la carte électronique 13 peuvent ainsi être agencés en regard du support 14 de la partie mobile 21. Les capteurs d'appui 12 mesurent un déplacement d du support 14 par rapport à la carte électronique 13. Un appui sur la dalle tactile capacitive 9 éloigne les capteurs d'appui 12 du support 14. Avec cette configuration, la distance d augmente quand l'effort augmente. Cette configuration permet d'augmenter la précision de mesure notamment pour les faibles valeurs d'efforts. En effet, les capteurs d'appui capacitif sont plus précis lorsqu'ils sont situés proches de la cible, c'est-à-dire pour les distances d faibles.

Une unité de traitement peut être reliée au capteur capacitif 10 et à l'actionneur vibratoire 7. L'unité de traitement comporte un ou plusieurs microcontrôleurs ou ordinateurs, ayant des mémoires et programmes adaptés pour modifier l'affichage de l'écran 8, pour recevoir les informations de position détectées par la dalle tactile capacitive 9. C'est par exemple l'ordinateur de bord du véhicule automobile.

En fonctionnement, lorsque l'utilisateur déplace ou appuie son doigt sur la dalle tactile capacitive 9 (flèche F2 sur la figure 3), l'actionneur vibratoire 7 fait vibrer la plaque frontale 11 dans la direction Z perpendiculaire à la plaque frontale 11 afin de générer un retour haptique à l'utilisateur. Le retour haptique généré permet par exemple d'assurer à l'utilisateur qu'une commande de validation d'une sélection a bien été prise en compte.

Grâce à la plaque frontale 11 réalisée en verre feuilleté, le bruit acoustique est limité par rapport à l'utilisation d'une plaque de verre simple comme on peut le voir sur la figure 5.

La figure 5 montre le niveau de bruit sonore N en fonction de la fréquence de la vibration haptique F pour une plaque de verre de l'ordre de 1,95mm d'épaisseur (courbe A), une plaque frontale 11 en verre feuilleté ayant un film amortisseur intercalaire 19 présentant une épaisseur e_{f} de 0,5mm (courbe B), une épaisseur e_{f} de 0,76mm (courbe C) et une épaisseur e_{f} de 0,38mm (courbe D). L'épaisseur eᵥ₁ des feuilles de verre 18a frontales des verres feuilletés est de l'ordre de 0,7mm et l'épaisseur eᵥ₂ des feuilles de verre 18b arrière est de l'ordre de 0,55mm.

On voit sur ce graphique que toutes les plaques frontales 11 réalisées en verre feuilleté (courbes B, C, D) permettent de réduire le bruit sonore comparé à une plaque de verre simple (courbe A).

La plaque frontale 11 en verre feuilleté dont l'épaisseur e_{f} du film amortisseur intercalaire 19 est de l'ordre de 0,5mm (courbe B) permet la meilleure atténuation de bruit sonore, de l'ordre de plusieurs dBA (jusqu'à -8bBA), dans la plage illustrée de basse fréquence. L'atténuation du bruit sonore est encore plus importante au-delà de 500Hz, notamment à haute fréquence. En outre, les amplitudes d'accélération des vibrations haptiques ne sont pas atténuées par l'utilisation d'un verre feuilleté, comme on peut le voir sur le graphique de la figure 6.

En effet, on voit sur cette figure que les amplitudes d'accélération des vibrations V sont sensiblement les mêmes pour une plaque frontale 11 en verre feuilleté de film amortisseur intercalaire 19 d'épaisseur e_{f} de l'ordre de 0,76mm (courbe C) ou 0,5mm (courbe B) que pour une plaque de verre (courbe A) et ce, quelque soit la fréquence de la vibration haptique dans la plage illustrée par la figure 6.

Du fait de sa faible épaisseur, la plaque frontale 11 en verre feuilleté ayant un film amortisseur intercalaire 19 présentant une épaisseur e_{f} de 0,38mm (courbe D) génère une légère amplification de l'haptique et atténue moins le bruit parasite.

Ainsi, un film amortisseur intercalaire 19 en PVB d'épaisseur e_{f} inférieure à 0,6mm et supérieure à 0,4mm, telle que de l'ordre de 0,5mm présente le meilleur compromis.

La figure 7 montre un deuxième exemple de réalisation.

Dans ce deuxième exemple, l'actionneur vibratoire 7 est fixé au support 14 de manière à faire vibrer le support 14 dans une direction latérale, parallèle au plan de la plaque frontale 11 (Flèche F3 sur la Figure 7).

Le support 14 portant l'écran tactile 6 est relié par au moins un élément élastique 15' à un support intermédiaire 23 mobile.

Sur l'exemple de la Figure 7, l'élément élastique 15' est flexible dans la direction latérale Y pour permettre à la partie mobile 21' de vibrer dans la direction Y. L'élément élastique 15' est plus rigide dans la direction Z perpendiculaire. C'est par exemple une lame ressort ou un bloc en caoutchouc.

Le support intermédiaire 23 est lui-même relié par au moins un élément élastique 24 à l'embase 16' de la partie fixe 22' destinée à être fixée au véhicule automobile. L'élément élastique 24 est configuré pour permettre les déplacements de la partie mobile 21' dans la direction Z et pour amortir les vibrations dans la direction Z. C'est par exemple un plot élastique, tel qu'un plot en caoutchouc.

Le support 14 s'étend en outre à l'arrière de l'écran d'affichage 8 entre la carte électronique 13 et le support intermédiaire 23. La carte électronique 13 est fixée à l'embase 16' par des plots 17' de l'embase 16' traversant le support 14 et le support intermédiaire 23.

En fonctionnement, lorsque l'utilisateur déplace ou appuie son doigt sur la dalle tactile capacitive 9 (Flèche F2 sur la Figure 7), l'actionneur vibratoire 7 fait vibrer la plaque frontale 11 dans la direction Y parallèle à la plaque frontale 11 afin de générer un retour haptique à l'utilisateur.

En outre, un appui sur la dalle tactile capacitive 9 éloigne les capteurs d'appui 12 portés par la carte électronique 13, du support 14 de la partie mobile 21'. La distance d augmente quand l'effort augmente.

## Revendications

1. Interface (5) à retour haptique pour la commande d'au moins une fonction d'un organe de véhicule automobile, comportant :
un écran tactile (6) comprenant :
- une dalle tactile capacitive (9) comportant au moins un capteur capacitif (10) et une plaque frontale (11) agencée sur le capteur capacitif (10), et
- un écran d'affichage (8) disposé sous la dalle tactile capacitive (9),
au moins un actionneur vibratoire (7) configuré pour faire vibrer la plaque frontale (11) au moins en réponse à un contact ou un appui exercé sur la dalle tactile capacitive (9) afin de générer un retour haptique,
**caractérisée en ce que** la plaque frontale (11) est formée d'un verre feuilleté comportant au moins deux feuilles de verre (18a, 18b) prenant en sandwich au moins un film amortisseur intercalaire (19) permettant d'amortir les vibrations sonores parasites induites par les vibrations haptiques.

2. Interface (5) à retour haptique selon la revendication précédente, **caractérisée en ce que** l'épaisseur (e_{f}) du film amortisseur intercalaire (19) est inférieure à 1mm, telle que inférieure à 0,6mm.

3. Interface (5) à retour haptique selon l'une des revendications précédentes, **caractérisée en ce que** l'épaisseur (e_{f}) du film amortisseur intercalaire (19) est supérieure à 0,2mm, telle que supérieure à 0,4mm.

4. Interface (5) à retour haptique selon l'une des revendications précédentes, **caractérisée en ce que** le film amortisseur intercalaire (19) est un polymère.

5. Interface (5) à retour haptique selon l'une des revendications précédentes, **caractérisée en ce que** le film amortisseur intercalaire (19) est un film PVB.

6. Interface (5) à retour haptique selon l'une des revendications précédentes, **caractérisée en ce qu'**une feuille de verre (18a) frontale du verre feuilleté présente une épaisseur (eᵥ₁) comprise entre 0,5mm et 1mm et une feuille de verre (18b) arrière du verre feuilleté présente une épaisseur (eᵥ₂) comprise entre 0,2mm et 0,7mm.

7. Interface (5) à retour haptique selon l'une des revendications précédentes, **caractérisée en ce que** l'actionneur vibratoire (7) est configuré pour faire vibrer un support (14) de l'interface (5) sur lequel est fixée la plaque frontale (11) dans une direction (Z) orthogonale au plan de la plaque frontale (11).

8. Interface (5) à retour haptique selon l'une des revendications 1 à 6, **caractérisée en ce que** l'actionneur vibratoire (7) est configuré pour faire vibrer un support (14) de l'interface (5) sur lequel est fixée la plaque frontale (11) dans une direction latérale (Y), parallèle au plan de la plaque frontale (11).

9. Interface (5) à retour haptique selon l'une des revendications précédentes, **caractérisée en ce qu'**elle comporte :
- une partie fixe (22 ; 22') comprenant une embase (16 ; 16'),
- au moins un élément élastique (15 ; 15', 24) agencé entre la partie fixe (22 ; 22') et une partie mobile (21 ; 21') de l'interface (5) comprenant l'écran tactile (6), et
- un capteur d'appui (11) capacitif configuré pour mesurer un déplacement de la partie mobile (21 ; 21') par rapport à la partie fixe (22 ; 22').

10. Interface (5) à retour haptique selon la revendication précédente, **caractérisée en ce que** la partie mobile (21 ; 21') comporte un support (14) sur lequel est fixée la plaque frontale (11), le support (14) s'étendant à l'arrière de l'écran d'affichage (8) en étant traversé par des plots (17 ; 17') de l'embase (16) portant le au moins capteur d'appui (11) ou une surface métallique, l'autre étant porté en vis-à-vis par le support (14) de manière qu'un appui sur la plaque frontale (11) rapproche le au moins un capteur d'appui (11) de la surface métallique.

11. Interface (5) à retour haptique selon la revendication précédente, **caractérisée en ce que** le support (14) est relié par au moins un élément élastique (15') à un support intermédiaire (23) mobile de l'interface (5), le support intermédiaire (23) étant relié par au moins un élément élastique (24) à la partie fixe (22'), les plots (17') de l'embase (16') traversant le support (14) et le support intermédiaire (23).

## Patentansprüche

1. Schnittstelle (5) mit haptischer Rückkopplung zum Bedienen mindestens einer Funktion eines Kraftfahrzeugorgans, beinhaltend:
- einen Touchscreen (6), umfassend:
- eine kapazitive berührungsempfindliche Platte (9), beinhaltend mindestens einen kapazitiven Sensor (10) und eine Frontplatte (11), die auf dem kapazitiven Sensor (10) angeordnet ist, und
- einen Anzeigebildschirm (8), der unter der kapazitiven berührungsempfindlichen Platte (9) angeordnet ist,
- mindestens einen Vibrationsaktor (7), der dazu ausgestaltet ist, die Frontplatte (11) mindestens als Reaktion auf eine Berührung oder eine Betätigung, die auf die kapazitive berührungsempfindliche Platte (9) ausgeübt wird, vibrieren zu lassen, um eine haptische Rückkopplung zu erzeugen,
**dadurch gekennzeichnet, dass** die Frontplatte (11) aus einem Verbundglas gebildet ist, das mindestens zwei Glasscheiben (18a, 18b) beinhaltet, die mindestens eine dämpfende Zwischenschichtfolie (19) sandwichartig aufnehmen, die es ermöglicht, die durch die haptischen Vibrationen bedingten akustischen Störvibrationen zu dämpfen.

2. Schnittstelle (5) mit haptischer Rückkopplung nach dem vorhergehenden Anspruch, **dadurch gekennzeichnet, dass** die Dicke (e_{f}) der dämpfenden Zwischenschichtfolie (19) kleiner als 1 mm ist, wie etwa kleiner als 0,6 mm.

3. Schnittstelle (5) mit haptischer Rückkopplung nach einem der vorhergehenden Ansprüche, **dadurch gekennzeichnet, dass** die Dicke (e_{f}) der dämpfenden Zwischenschichtfolie (19) größer als 0,2 mm ist, wie etwa größer als 0,4 mm.

4. Schnittstelle (5) mit haptischer Rückkopplung nach einem der vorhergehenden Ansprüche, **dadurch gekennzeichnet, dass** die dämpfende Zwischenschichtfolie (19) ein Polymer ist.

5. Schnittstelle (5) mit haptischer Rückkopplung nach einem der vorhergehenden Ansprüche, **dadurch gekennzeichnet, dass** die dämpfende Zwischenschichtfolie (19) eine PVB-Folie ist.

6. Schnittstelle (5) mit haptischer Rückkopplung nach einem der vorhergehenden Ansprüche, **dadurch gekennzeichnet, dass** eine frontale Glasscheibe (18a) des Verbundglases eine Dicke (eᵥ₁) zwischen 0,5 mm und 1 mm aufweist und eine hintere (18b) Glasscheibe des Verbundglases eine Dicke (eᵥ₂) zwischen 0,2 mm und 0,7 mm aufweist.

7. Schnittstelle (5) mit haptischer Rückkopplung nach einem der vorhergehenden Ansprüche, **dadurch gekennzeichnet, dass** der Vibrationsaktor (7) dazu ausgestaltet ist, einen Träger (14) der Schnittstelle (5), auf dem die Frontplatte (11) fixiert ist, in eine senkrecht zur Ebene der Frontplatte (11) verlaufende Richtung (Z) vibrieren zu lassen.

8. Schnittstelle (5) mit haptischer Rückkopplung nach einem Ansprüche 1 bis 6, **dadurch gekennzeichnet, dass** der Vibrationsaktor (7) dazu ausgestaltet ist, einen Träger (14) der Schnittstelle (5), auf dem die Frontplatte (11) fixiert ist, in eine parallel zur Ebene der Frontplatte (11) verlaufende seitliche Richtung (Y) vibrieren zu lassen.

9. Schnittstelle (5) mit haptischer Rückkopplung nach einem der vorhergehenden Ansprüche, **dadurch gekennzeichnet, dass** sie beinhaltet:
- einen feststehenden Teil (22; 22'), der einen Sockel (16; 16') umfasst,
- mindestens ein elastisches Element (15; 15', 24), das zwischen dem feststehenden Teil (22; 22') und einem beweglichen Teil (21; 21') der Schnittstelle (5) angeordnet ist, der den Touchscreen (6) umfasst, und
- einen kapazitiven Betätigungssensor (11), der dazu ausgestaltet ist, eine Verlagerung des beweglichen Teils (21; 21') in Bezug auf den feststehenden Teil (22; 22') zu messen.

10. Schnittstelle (5) mit haptischer Rückkopplung nach dem vorhergehenden Anspruch, **dadurch gekennzeichnet, dass** der bewegliche Teil (21; 21') einen Träger (14) beinhaltet, auf dem die Frontplatte (11) fixiert ist, wobei sich der Träger (14) hinter dem Anzeigebildschirm (8) erstreckt und dabei von Stiften (17; 17') des Sockels (16) durchquert wird, die den mindestens Betätigungssensor (11) oder eine Metallfläche tragen, wobei der andere gegenüberliegend von dem Träger (14) so getragen wird, dass eine Betätigung der Frontplatte (11) den mindestens einen Betätigungssensor (11) der Metallfläche nähert.

11. Schnittstelle (5) mit haptischer Rückkopplung nach dem vorhergehenden Anspruch, **dadurch gekennzeichnet, dass** der Träger (14) durch mindestens ein elastisches Element (15') mit einem beweglichen Zwischenträger (23) der Schnittstelle (5) verbunden ist, wobei der Zwischenträger (23) durch mindestens ein elastisches Element (24) mit dem feststehenden Teil (22') verbunden ist, wobei die Stifte (17') des Sockels (16') den Träger (14) und den Zwischenträger (23) durchqueren.

## Claims

1. Haptic feedback interface (5) for controlling at least one function of a motor vehicle member, having:
- a touchscreen (6) comprising:
- a capacitive touch tile (9) having at least one capacitive sensor (10) and a front panel (11) arranged on the capacitive sensor (10), and
- a display screen (8) disposed beneath the capacitive touch tile (9),
- at least one vibratory actuator (7) configured to make the front panel (11) vibrate at least in response to the capacitive touch tile (9) being contacted or pressed, in order to generate haptic feedback,
**characterized in that** the front panel (11) is formed from laminated glass having at least two sheets of glass (18a, 18b) sandwiching at least one interposed damper film (19) for damping the parasitic acoustic vibrations caused by the haptic vibrations.

2. Haptic feedback interface (5) according to the preceding claim, **characterized in that** the thickness (e₁) of the interposed damper film (19) is less than 1 mm, such as less than 0.6 mm.

3. Haptic feedback interface (5) according to either of the preceding claims, **characterized in that** the thickness (e₁) of the interposed damper film (19) is greater than 0.2 mm, such as greater than 0.4 mm.

4. Haptic feedback interface (5) according to one of the preceding claims, **characterized in that** the interposed damper film (19) is a polymer.

5. Haptic feedback interface (5) according to one of the preceding claims, **characterized in that** the interposed damper film (19) is a PVB film.

6. Haptic feedback interface (5) according to one of the preceding claims, **characterized in that** a front sheet of glass (18a) of the laminated glass has a thickness (eᵥ₁) of between 0.5 mm and 1 mm and a rear sheet of glass (18b) of the laminated glass has a thickness (eᵥ₂) of between 0.2 mm and 0.7 mm.

7. Haptic feedback interface (5) according to one of the preceding claims, **characterized in that** the vibratory actuator (7) is configured to make a support (14) of the interface (5), to which the front panel (11) is fixed, vibrate in a direction (Z) orthogonal to the plane of the front panel (11) .

8. Haptic feedback interface (5) according to one of Claims 1 to 6, **characterized in that** the vibratory actuator (7) is configured to make a support (14) of the interface (5), to which the front panel (11) is fixed, vibrate in a lateral direction (Y) parallel to the plane of the front panel (11).

9. Haptic feedback interface (5) according to one of the preceding claims, **characterized in that** it has:
- a fixed part (22; 22') comprising a base (16; 16'),
- at least one elastic element (15'; 15', 24) arranged between the fixed part (22; 22') and a movable part (21; 21') of the interface (5) comprising the touchscreen (6), and
- a capacitive pressure sensor (11) configured to measure a movement of the movable part (21; 21') with respect to the fixed part (22; 22').

10. Haptic feedback interface (5) according to the preceding claim, **characterized in that** the movable part (21; 21') has a support (14) to which the front panel (11) is fixed, the support (14) extending at the rear of the display screen (8) and being passed through by pads (17; 17') of the base (16) bearing the at least pressure sensor (11) or a metal surface, the other being borne in a facing manner by the support (14) such that pressing on the front panel (11) moves the at least one pressure sensor (11) close to the metal surface.

11. Haptic feedback interface (5) according to the preceding claim, **characterized in that** the support (14) is connected by at least one elastic element (15') to a movable intermediate support (23) of the interface (5), the intermediate support (23) being connected by at least one elastic element (24) to the fixed part (22'), the pads (17') of the base (16') passing through the support (14) and the intermediate support (23).
